# EUROPEAN PATENT APPLICATION

(11) **EP 3 434 719 A1**
(43) Date of publication of application: **30.01.2019**
(21) Application number: 17770213.1
(22) Date of filing: 21.03.2017
(51) Int. Cl.: C08J 7/06, C09K 3/00

(54) **ANTI-TACK AGENT FOR UNVULCANIZED RUBBER AND AQUEOUS DISPERSION OF ANTI-TACK AGENT FOR UNVULCANIZED RUBBER**

(30) Priority: 24.03.2016 JP 2016060078
(71) Applicant: Lion Specialty Chemicals Co., Ltd., Sumida-ku Tokyo 130-8644 (JP)
(72) Inventor: OKA Takao, Tokyo 130-8644 (JP)
(74) Representative: Becker Kurig Straus
(86) International application number: PCT/JP2017/011227
(87) International publication number: WO 2017/164171

(57) **Abstract**

Provided is an anti-tack agent for unvulcanized rubber capable of achieving both anti-tack properties and reduction in the amount of foreign matter attributed to the anti-tack agent. The anti-tack agent for unvulcanized rubber is characterized by containing components (A)-(C), the component (B) contains a component (B1), and the contained proportion of the component (B1) is 2-50 mass% with respect to the total mass amount of the component (B). (A) Smectite. (B) At least one material selected from the group consisting of inorganic silicates excluding smectite, inorganic carbonates, inorganic sulfates, metal oxides, metal hydroxides, red iron oxide, carbon black, graphite, and metallic soaps. (C) Surfactant. (B1) At least one metallic soap selected from the group consisting of zinc, magnesium, and aluminum.

## Description

### [Technical Field]

The present invention relates to an anti-tack agent for unvulcanized rubber and an aqueous dispersion of an anti-tack agent for unvulcanized rubber.

### [Background Art]

In the field of production processing of rubber such as natural rubber (NR), butadiene rubber (BR), and styrene butadiene rubber (SBR), unvulcanized rubber molded into a sheet form may be stacked or folded and stored before it is subjected to the next process of molding, vulcanization, and the like. During such storage, in order to prevent unvulcanized rubbers from coming in close contact with each other, an anti-tack agent (an adhesion preventing agent) is adhered to the surface of unvulcanized rubber (for example, Patent Literature 1).

As a method of adhering an anti-tack agent to the surface of unvulcanized rubber, there is, for example, a wet method using a suspension in which an anti-tack agent is dispersed in water. Specifically, first, a suspension is adhered to the surface of unvulcanized rubber in a high temperature state (for example, 80 to 150 °C) after being molded into a sheet form. As an adhesion method, for example, there is a method in which a suspension is sprayed by a shower facility, and unvulcanized rubber in a high temperature state is immersed (dipped) in a tank containing a suspension for a short time. Water in the adhered suspension is rapidly evaporated and dried by heat of the unvulcanized rubber and thereby a coating of the anti-tack agent is formed on the surface of the unvulcanized rubber.

### [Citation List]

### [Patent Literature]

[Patent Literature 1]
   Japanese Unexamined Patent Application Publication No. 2002-363532

### [Summary of Invention]

### [Technical Problem]

A reduction in the amount of contamination caused by an anti-tack agent is required for an anti-tack agent for unvulcanized rubber. The contamination caused by the anti-tack agent is derived from, for example, a mass of a dried and solidified product of the anti-tack agent. More specifically, for example, a mass of the dried and solidified product of the anti-tack agent generated during an anti-tack treatment is unlikely to collapse in a rubber kneading process and is not finely dispersed in rubber during rubber kneading, but remains unchanged in unvulcanized rubber such as a green tire. Then, when the unvulcanized rubber is directly molded and vulcanized and forms a product, the mass of the dried and solidified product of the anti-tack agent remains in the product, and becomes contamination, and there is a problem such as impairment of the appearance of the product such as a tire.

As a component of the anti-tack agent for unvulcanized rubber, smectites having a strong effect of improving anti-tack properties are often used. An anti-tack agent for unvulcanized rubber containing a smectite has excellent anti-tack properties because it forms a strong anti-tack coating when dried and solidified. However, since the hardness of the anti-tack coating is high, there is a risk of contamination derived from the anti-tack coating occurring.

Therefore, for example, attempts to reduce the hardness of the dried and solidified product of the anti-tack agent and reduce the amount of contamination in the tire by reducing silicates, mainly smectites, and using large amounts of calcium carbonate and talc have been performed (Patent Literature 1). However, when calcium carbonate and talc are used as main components, although an effect of lowering the hardness of a solidified product is strong, anti-tack properties deteriorate and it is difficult to achieve both anti-tack properties and a reduction in the amount of contamination.

Thus, an objective of the present invention is to provide an anti-tack agent for unvulcanized rubber that can achieve both anti-tack properties and a reduction in the amount of contamination caused by the anti-tack agent and an aqueous dispersion of the anti-tack agent for unvulcanized rubber.

### [Solution to Problem]

In order to achieve the objective, an anti-tack agent for unvulcanized rubber of the present invention contains the following components (A) to (C),
wherein the following component (B) contains the following component (B1) and a content of the following component (B1) is 2 mass% or more and 50 mass% or less with respect to a total mass of the following component (B):
(A) a smectite,
(B) at least one material selected from the group consisting of inorganic silicates excluding smectites, inorganic carbonates, inorganic sulfates, metal oxides, metal hydroxides, red iron oxide, carbon black, graphite, and metallic soaps,
(C) a surfactant, and
(B1) at least one metallic soap selected from the group consisting of zinc, magnesium, and aluminum.

An aqueous dispersion of an anti-tack agent for unvulcanized rubber of the present invention contains the following components (A) to (C) and water,
wherein the following component (B) contains the following component (B1) and a content of the following component (B1) is 2 mass% or more and 50 mass% or less with respect to a total mass of the following component (B):
(A) a smectite,
(B) at least one material selected from the group consisting of inorganic silicates excluding smectites, inorganic carbonates, inorganic sulfates, metal oxides, metal hydroxides, red iron oxide, carbon black, graphite, and metallic soaps,
(C) a surfactant, and
(B1) at least one metallic soap selected from the group consisting of zinc, magnesium, and aluminum.

### [Advantageous Effects of Invention]

According to the anti-tack agent for unvulcanized rubber of the present invention, since a sufficient anti-tack coating can be formed on the surface of unvulcanized rubber, it is possible to obtain excellent anti-tack properties. In addition, according to the anti-tack agent for unvulcanized rubber of the present invention, since it is possible to obtain the anti-tack coating with low hardness, it is possible to reduce the amount of contamination caused by the anti-tack agent. That is, according to the anti-tack agent for unvulcanized rubber of the present invention or the aqueous dispersion of an anti-tack agent for unvulcanized rubber of the present invention using the same, it is possible to achieve both anti-tack properties and a reduction in the amount of contamination caused by the anti-tack agent.

### [Description of Embodiments]

The present invention will be described below in more detail. However, the present invention is not limited to the following description.

As described above, an anti-tack agent for unvulcanized rubber of the present invention contains the following components (A) to (C). The following component (B) contains the following component (B1). In addition, appropriately, the anti-tack agent for unvulcanized rubber of the present invention may or may not contain optional components other than the following components (A) to (C).
(A) A smectite
(B) At least one material selected from the group consisting of inorganic silicates excluding smectites, inorganic carbonates, inorganic sulfates, metal oxides, metal hydroxides, red iron oxide, carbon black, graphite, and metallic soaps
(C) A surfactant
(B1) At least one metallic soap selected from the group consisting of zinc, magnesium, and aluminum

In the anti-tack agent for unvulcanized rubber of the present invention, for example, a content of the component (A) may be 10 mass% or more and 50 mass% or less, a content of the component (C) may be 2 mass% or more and 25 mass% or less, and a content of the component (B1) may be 2 mass% or more and 25 mass% or less with respect to a total mass of the components (A) to (C).

As described above, an aqueous dispersion of an anti-tack agent for unvulcanized rubber of the present invention contains the components (A) to (C) and water, and the component (B) contains the component (B1). In addition, appropriately, the anti-tack agent for unvulcanized rubber of the present invention may or may not contain optional components other than the components (A) to (C) and water.

In the aqueous dispersion of an anti-tack agent for unvulcanized rubber of the present invention, for example, a content of the component (A) may be 10 mass% or more and 50 mass% or less, a content of the component (C) may be 2 mass% or more and 25 mass% or less, and a content of the component (B1) may be 2 mass% or more and 25 mass% or less with respect to a total mass of the components (A) to (C).

### [Smectite (A)]

The smectite (A) (the component (A)) is not particularly limited. For example, smectites such as montmorillonite, beidellite, nontronite, saponite, jectorite, sauconite, and stevensite and bentonite containing montmorillonite may be used. The component (A) may contain only one type of smectite or may contain two or more types of smectites in combination.

The component (A) functions as, for example, a component responsible for anti-tack properties. Specifically, for example, it is thought that, when the component (A) forms a coating, anti-tack properties can be exhibited. A content of the component (A) in the anti-tack agent for unvulcanized rubber of the present invention can be selected according to the purpose. With respect to a total mass of the components (A) to (C), the content of the component (A) is preferably 10 mass% or more and 50 mass% or less, more preferably 10 mass% or more and 45 mass% or less, still more preferably 15 mass% or more and 40 mass% or less, yet more preferably 15 mass% or more and 35 mass% or less, and most preferably 15 mass% or more and 30 mass% or less. When the content of the component (A) is 10 mass% or more, this is preferable because favorable anti-tack properties can be obtained. On the other hand, when the content of the component (A) is 50 mass% or less, this is preferable because an effect of lowering the hardness of the dried and solidified product of the anti-tack agent of the present invention can be more effectively obtained, and a favorable contamination reducing effect can be obtained.

The component (A) (smectite) may be used, for example, in the form of an inorganic compound (for example, a powder of the inorganic compound or the like) containing a smectite. In this case, a method of measuring a content of the smectite in the inorganic compound is not particularly limited. For example, the content can be measured by the following measurement method.

### (Method of measuring content of smectite)

An inorganic compound containing a smectite is analyzed by X-ray diffraction and a content of the smectite is calculated from a diffraction peak intensity derived from the smectite appearing around 2θ=7°. Analysis conditions of X-ray diffraction when a content of a smectite is quantified are as follows.

### X-ray diffraction analysis conditions

- Measurement device: X'Pert PRO MRD (commercially available from PANalytical)
- Target: Cu
- Tube voltage: 45 kV
- Tube current: 40 mA
- Scan axis: goniometer
- Scan range: 5° to 60°
- Step size: 0.03°
- Step time: 12.7 seconds
- Divergence slit: 1/2°
- Scattering slit: 1°
- Receiving slit: None

### [Component (B)]

As described above, the component (B) of the anti-tack agent for unvulcanized rubber of the present invention is at least one material selected from the group consisting of inorganic silicates excluding smectites, inorganic carbonates, inorganic sulfates, metal oxides, metal hydroxides, red iron oxide, carbon black, graphite, and metallic soaps. It is thought that the component (B) mainly acts, for example, as a lubricant (imparts lubricity).

In the component (B), the inorganic silicates excluding smectites are not particularly limited. For example, silicates such as kaolins, aluminum silicates, calcium silicate, clays, talc, micas, sericite, and nepheline syenite may be used. The inorganic carbonates are not particularly limited. For example, carbonates such as calcium carbonate, magnesium carbonate, and barium carbonate may be used. The inorganic sulfates are not particularly limited. For example, sulfates such as calcium sulfate and barium sulfate may be used. The metal oxides are not particularly limited. For example, metal oxides such as silica, alumina, magnesium oxide, antimony trioxide, titanium oxide, white carbon, and iron oxide may be used. The metal hydroxides are not particularly limited. For example, metal hydroxides such as aluminum hydroxide, magnesium hydroxide, and iron hydroxide may be used.

In addition, as described above, the component (B) contains the component (B1), that is, at least one metallic soap selected from the group consisting of zinc, magnesium, and aluminum (fatty acid metal salts). When the metallic soap is contained, the hardness of the anti-tack agent for unvulcanized rubber is thought to be lowered and anti-tack properties are thought to be improved. Here, specific examples of the component (B1) and the like will be described below. As the metallic soap, in addition to the component (B1), for example, a fatty acid calcium salt and a barium salt may be used. The fatty acid calcium salt and barium salt are not particularly limited. For example, a salt in which a metal (at least one metal selected from the group consisting of zinc, magnesium, and aluminum) of the component (B1) to be described below is replaced with calcium or barium may be used. Here, each of the metallic soaps according to these examples is a water-insoluble salt, and does not correspond to an anionic surfactant. The component (B) preferably further contains at least one of inorganic carbonates and inorganic silicates excluding smectites. Among them, it is preferable to contain at least one of kaolins, micas, talc, and calcium carbonate because the hardness of the anti-tack agent for unvulcanized rubber is further lowered. In order to lower the hardness, it is more preferable that calcium carbonate be contained, and it is most preferable that at least one of kaolins, micas, and talc and calcium carbonate be contained together. In addition, when a kaolin and a mica and/or talc are used in combination, this is preferable because more excellent anti-tack properties can be obtained.

### [Component (B1)]

The at least one metallic soap selected from the group consisting of zinc, magnesium, and aluminum (B1) (the component (B1), hereinafter also referred to as a "metallic soap (B1)") is not particularly limited. For example, the at least one metallic soap selected from the group consisting of zinc caprylate, magnesium caprylate, zinc caprate, magnesium caprate, zinc laurate, magnesium laurate, zinc myristate, magnesium myristate, zinc palmitate, magnesium palmitate, zinc stearate, magnesium stearate, aluminum stearate, aluminum trioctadecanoate, aluminum dioctadecanoate, aluminum monooctadecanoate, zinc octadecanoate, magnesium octadecanoate, zinc oleate, magnesium oleate, zinc behenate, magnesium behenate, zinc 12-hydroxystearate, magnesium 12-hydroxystearate, zinc 14-octadecanoate, magnesium 14-octadecanoate, zinc 8-octadecanoate, magnesium 8-octadecanoate, zinc 6-octadecanoate, magnesium 6-octadecanoate, coconut fatty acid zinc, coconut fatty acid magnesium, palm oil fatty acid zinc, palm oil fatty acid magnesium, palm kernel oil fatty acid zinc, palm kernel oil fatty acid magnesium, beef tallow fatty acid zinc, beef tallow fatty acid magnesium, castor oil fatty acid zinc, and castor oil fatty acid magnesium may be used.

It is thought that, when the metallic soap (B1) is contained in the anti-tack agent for unvulcanized rubber of the present invention together with the component (A), sufficient anti-tack properties are obtained, the hardness of a dry coating of the anti-tack agent formed on the surface of unvulcanized rubber is lowered, and the amount of contamination of the rubber is reduced. In addition, anti-tack properties can be improved by the metallic soap (B1).

As described above, a content of the metallic soap (B1) in the anti-tack agent for unvulcanized rubber of the present invention is 2 mass% or more, and preferably 5 mass% or more with respect to the mass of the entire component (B). In addition, as described above, a content (mass) of the metallic soap (B1) is 50 mass% or less, preferably 35 mass% or less, more preferably 25 mass% or less, and most preferably 15 mass% or less with respect to the mass of the entire component (B). When a content of the metallic soap (B1) in the component (B) is 2 mass% or more, the hardness of the dried and solidified product is lowered and favorable anti-tack properties can be obtained. On the other hand, when a content of the metallic soap (B1) in the component (B) is 50 mass% or less, this is preferable because the effect of lowering the hardness of the dried and solidified product of the anti-tack agent and the contamination reducing effect are sufficiently obtained and scattering of the coating formed on the surface of unvulcanized rubber is reduced. In addition, a sufficient amount of the component (B) other than the component (B1) can be blended.

In addition, for example, the content of the component (B1) is preferably 2 mass% or more and 25 mass% or less, more preferably 2 mass% or more and 20 mass% or less, still more preferably 3 mass% or more and 15 mass% or less, and most preferably 3 mass% or more and 10 mass% or less with respect to a total mass of the components (A) to (C). When the content of the component (B1) is within the above range, this is preferable because, for example, the effect of lowering the hardness of the dried and solidified product of the anti-tack agent and the contamination reducing effect of the present invention can be sufficiently obtained, and moreover, the coating that is unlikely to scatter on the surface of unvulcanized rubber is formed, and also a sufficient amount of the component (B) other than the component (B1) can be blended so that favorable lubricity is obtained.

### [Surfactant (C)]

In the anti-tack agent for unvulcanized rubber of the present invention, for example, the surfactant (C) (the component (C)) has a function of imparting wettability to the anti-tack agent for unvulcanized rubber and dispersibility in water. The surfactant (C) (the component (C)) is not particularly limited. For example, the following surfactants (1) to (5) may be used. In addition, as the surfactant (C), only one type of surfactant may be used or two or more types thereof may be used in combination.
(1) A carboxylic acid type anionic surfactant such as a higher fatty acid salt, an alkyl ether carboxylate, a polyoxyalkylene ether carboxylate, an alkyl (or alkenyl) amido ether carboxylate, and an acylaminocarboxylate
(2) A sulfate anionic surfactant such as a higher alcohol sulfate ester salt, a polyoxyalkylene higher alcohol sulfate ester salt, an alkylphenyl ether sulfate ester salt, a polyoxyalkylene alkylphenyl ether sulfate ester salt, and a glycerin fatty acid ester monosulfate ester salt
(3) A sulfonic acid type anionic surfactant such as an alkane sulfonate, an α-olefin sulfonate, a linear alkylbenzene sulfonate, an α-sulfo fatty acid ester salt, and a dialkyl sulfosuccinate
(4) A phosphate ester type anionic surfactant such as an alkyl phosphate ester salt, a polyoxyalkylene alkyl phosphate ester salt, a polyoxyalkylene alkylphenyl phosphate ester salt, and a glycerin fatty acid ester monophosphate ester salt
(5) A polyoxyalkylene alkyl ether type nonionic surfactant

A counterion of the anionic surfactant is not particularly limited. An alkali metal such as sodium or potassium and an alkanolamine such as a monoethanolamine and a diethanolamine are preferable. These may be used alone or two or more types thereof may be used in combination.

As the anionic surfactant, an α-olefin sulfonate and a dialkyl sulfosuccinate are preferable since an anti-tack agent suspension having excellent wettability in the surface of unvulcanized rubber can be obtained. As the α-olefin sulfonate, an α-olefin sulfonic acid Na salt "Lipolan LB-840" (commercially available from Lion Specialty Chemicals Co., Ltd.) is preferable. As the dialkyl sulfosuccinate, a dioctyl sulfosuccinate Na salt is more preferable.

The nonionic surfactant is not particularly limited. In the present invention, for example, a nonionic surfactant represented by the following Formula (1) can be used. The nonionic surfactant of the following Formula (1) is speculated to exhibit actions of lowering surface tension of the anti-tack agent suspension with respect to the surface of unvulcanized rubber together with the anionic surfactant, and effectively improving adhesion of the anti-tack agent to the surface of unvulcanized rubber. However, this speculation does not limit the present invention at all.

RO-(AO)ₙ-H (1)

In Formula (1), R represents an aliphatic hydrocarbon group having 8 to 18 carbon atoms. The aliphatic hydrocarbon group may be linear or branched and may also be saturated or unsaturated. The number of carbon atoms of R is preferably 12 to 16 and more preferably 12 to 13 because this leads to excellent dispersibility in the component (A).

AO represents an oxyalkylene group having 2 to 4 carbon atoms and n represents an average addition mole number of AO.

n is preferably 1 to 30, more preferably 1 to 25, and most preferably 1 to 15. Specifically, in order to prevent surface activity performance from deteriorating and the dispersibility of the component (A) from deteriorating, n is preferably 1 or more (that is, n is not 0). In addition, in order to prevent deterioration of adhesion due to too high hydrophilicity, n is preferably a number that does not exceed 30 and more preferably a number that does not exceed 25. It is speculated that, when n is preferably in a range of 1 to 30 and more preferably in a range of 1 to 25, the dispersibility of the component (A) is further improved, and even if the hydrophobicity of the surface of unvulcanized rubber is high, sufficient viscoelasticity is applied to the coating and thus the adhesion is improved. However, this speculation does not limit the present invention at all.

The oxyalkylene group having 2 to 4 carbon atoms is, for example, a polymerization unit obtained by adding an alkylene oxide having 2 to 4 carbon atoms (formed by addition polymerization). Specific examples of the oxyalkylene group having 2 to 4 carbon atoms include an oxyethylene group (EO) to which ethylene oxide is added, an oxypropylene group (PO) to which propylene oxide is added and an oxybutylene group (BO) to which butylene oxide is added. (AO)ₙ contains at least an oxyethylene group in its structure. When (AO)ₙ contains a plurality of types of oxyethylene groups (EO), oxypropylene groups (PO), and oxybutylene groups (BO), these groups may be arranged in a block form or arranged randomly.

A preferable (AO)ₙ is composed of only an oxyethylene group (EO) because this leads to an excellent balance between hydrophilicity and hydrophobicity.

A content of the surfactant (C) in the anti-tack agent for unvulcanized rubber of the present invention can be selected according to the purpose. With respect to a total mass of the components (A) to (C), for example, the content of the surfactant (C) is 2 mass% or more and 25 mass% or less, preferably 2 mass% or more and 20 mass% or less, and more preferably 5 mass% or more and 15 mass% or less. When the content of the surfactant (C) is 2 mass% or more, problems such as the occurrence of cissing due to insufficient wettability of an anti-tack solution with respect to rubber are unlikely to occur. When the content of the surfactant (C) is 25 mass% or less, a problem in which much foam is generated and an overflow occurs in a facility during use is unlikely to occur.

### [Optional components]

As described above, the anti-tack agent for unvulcanized rubber of the present invention may or may not contain optional components other than the components (A) to (C). For example, in the anti-tack agent for unvulcanized rubber of the present invention, additives such as an antifoaming agent, a wettable adjuvant, a viscosity adjuvant, and a contamination reducing adjuvant may be contained as optional components as necessary.

The antifoaming agent is not particularly limited. Examples of the antifoaming agent include a fat and oil type antifoaming agent such as castor oil, sesame oil, linseed oil, or an animal or vegetable oil; a fatty acid ester type antifoaming agent such as isoamyl stearate, distearyl succinate, ethylene glycol distearate, or butyl stearate; an alcohol antifoaming agent such as a polyoxyalkylene monohydric alcohol di-t-amylphenoxyethanol, 3-heptanol, or 2-ethylhexanol; an ether antifoaming agent such as di-t-amylphenoxyethanol, 3-heptyl cellosolve nonyl cellosolve, or 3-heptyl carbitol; a phosphate ester antifoaming agent such as tributyl phosphate or tris(butoxyethyl) phosphate; an amine antifoaming agent such as diamylamine; an amide antifoaming agent such as a polyalkylene amide or acylate polyamine; a mineral oil; and a silicone oil. The antifoaming agent may be used alone or two or more thereof may be used in combination.

The wettable adjuvant is not particularly limited. For example, alcohols are exemplified. More specifically, examples of the wettable adjuvant include methanol, ethanol, hexanol, glycerin, 1,3-butanediol, propylene glycol, dipropylene glycol, pentylene glycol, hexylene glycol, polyethylene glycol, solutol, maltitol, sucrose, erythritol, xylitol, polyethylene glycol, polypropylene glycol, and adducts of ethylene oxide and propylene oxide of polyhydric alcohols. The wettable adjuvant may be used alone or two or more thereof may be used in combination.

The viscosity adjuvant is not particularly limited. For example, water-soluble polymers are exemplified. More specifically, examples of the viscosity adjuvant include synthetic water-soluble polymers such as proteins, polyacrylic acid, sodium polyacrylate, polyacrylamide, polyvinyl alcohol, polyvinyl pyrrolidone, polyethylene glycol, polyethylene oxide, water-soluble urethane resins, water-soluble melamine resins, water-soluble epoxy resins, water-soluble butadiene resins, and water-soluble phenol resins; and natural water-soluble polymers such as xanthan gum, guar gum, welan gum, locust bean gum, diyutan gum, tamarind gum, tamarind seed gum, tragacanth gum, arabic gum, carrageenan, ramsan gum, succinoglycan, tara gum, gellan gum, karaya gum, pectin, alginic acid derivatives, and cellulose ethers. The viscosity adjuvant may be used alone or two or more thereof may be used in combination.

In addition, in the anti-tack agent for unvulcanized rubber of the present invention, water may be contained in order to reduce a powder flow thereof. In this case, a content of water is not particularly limited, and is, for example, about 2 to 3 mass%.

### [Anti-tack agent for unvulcanized rubber, aqueous dispersion for unvulcanized rubber, and unvulcanized rubber subjected to an anti-tack treatment]

In the anti-tack agent for unvulcanized rubber of the present invention, as described above, a smectite (the component (A)) is preferably contained at 10 mass% or more and 50 mass% or less. Since the smectite is a component responsible for anti-tack properties, in order to obtain favorable anti-tack properties, as described above, a content in the anti-tack agent is preferably 10 mass% or more. On the other hand, when the content in the anti-tack agent is 50 mass% or less, this is preferable because an effect of lowering the hardness of the dried and solidified product of the anti-tack agent of the present invention can be more effectively obtained and a favorable contamination reducing effect can be obtained as described above. Here, the smectite is distributed in a form in which water is contained. However, a content of the smectite mentioned in this specification is a value excluding the amount of water.

A method of producing an anti-tack agent for unvulcanized rubber of the present invention is not particularly limited. For example, it can be produced by mixing all components (the components (A) to (C) and optional components blended in as necessary) of the anti-tack agent for unvulcanized rubber together. As a device used for mixing, for example, a device having a configuration in which a stirring blade is provided in a container can be used. Specifically, for example, a powder mixer that can perform rocking stirring or stirring such as a ribbon type mixer and a vertical screw type mixer can be used. In addition, multifunctional powder mixers in which a plurality of stirring devices are combined, such as Super Mixer (commercially available from Kawata MFG. Co., Ltd.), High Speed Mixer (commercially available from EarthTechnica Co., Ltd.), Newgram Machine (commercially available from Seishin Enterprise Co., Ltd.), and SV Mixer (commercially available from Kobelco Eco-Solutions Co., Ltd.), can be used. In addition, dry grinding machines such as a jaw crusher, a gyratory crusher, a cone crusher, a roll crusher, an impact crusher, a hammer crusher, a rod mill, a ball mill, a vibrating rod mill, a vibration ball mill, a disc type mill, a jet mill, and a cyclone mill may be used.

In addition, among all components (the components (A) to (C) and optional components blended in as necessary) of the anti-tack agent for unvulcanized rubber, when at least one liquid component is used, a spray device or a shower device for applying or spraying the liquid component to a mixture other than the liquid component may be used together.

In the case of a powder-like anti-tack agent for unvulcanized rubber, a proportion of the total mass of the components (A) to (C) with respect to the whole powdery anti-tack agent may be 100 mass%. In addition, when water and/or the other optional components are contained, a proportion of the total mass of the components (A) to (C) is not particularly limited. For example, with respect to the total mass of the anti-tack agent for unvulcanized rubber, the proportion is 80 mass% or more, preferably 85 mass% or more and 97 mass% or less, and more preferably 85 mass% or more and 95 mass% or less.

The anti-tack agent for unvulcanized rubber of the present invention can be used as, for example, the aqueous dispersion of an anti-tack agent for unvulcanized rubber of the present invention. A method of producing an aqueous dispersion of an anti-tack agent for unvulcanized rubber of the present invention is not particularly limited. For example, as described above, all components of the anti-tack agent for unvulcanized rubber of the present invention may be mixed together, and the anti-tack agent for unvulcanized rubber of the present invention may be produced and may be then dispersed in water. In addition, for example, components of the anti-tack agent for unvulcanized rubber of the present invention may be dissolved or dispersed in water, and mixed in water to prepare an aqueous dispersion of an anti-tack agent for unvulcanized rubber of the present invention. A method of dissolving or dispersing the components is not particularly limited. For example, a powder-like anti-tack agent for unvulcanized rubber may be dispersed in a predetermined amount of water in a stirring tank. In the aqueous dispersion of an anti-tack agent for unvulcanized rubber of the present invention, contents of the component (A), the component (B), and the component (C) are not particularly limited. For example, with respect to the total mass of the aqueous dispersion of an anti-tack agent for unvulcanized rubber of the present invention, the content is 0.5 mass% or more and 10 mass% or less, more preferably 0.5 mass% or more and 8 mass% or less, still more preferably 0.5 mass% or more and 6 mass% or less, and most preferably 0.5 mass% or more and 4 mass% or less.

In the case of the aqueous dispersion of an anti-tack agent for unvulcanized rubber, a total content of the components (A) to (C) with respect to a total mass of components other than water in the aqueous dispersion of an anti-tack agent for unvulcanized rubber is, for example, 90 mass% or more and 100 mass% or less, preferably 90 mass% or more and 99 mass% or less, and most preferably 93 mass% or more and 98 mass% or less.

When the aqueous dispersion of an anti-tack agent for unvulcanized rubber is produced as described above, it can be directly applied to the surface of unvulcanized rubber by a wet method to be described below for use. Here, in the case of the aqueous dispersion of an anti-tack agent for unvulcanized rubber as described above, when the component (B1) contains at least one of a zinc salt and a magnesium salt, the viscosity of the aqueous dispersion of an anti-tack agent for unvulcanized rubber increases. Therefore, when the aqueous dispersion is applied to unvulcanized rubber by a wet method to be described below, it is easy to apply it homogeneously, which is preferable. In particular, the magnesium salt is more preferable because it exhibits a favorable thickening property even if an amount (content) of the smectite (the component (A)) blended in is small.

A method of producing unvulcanized rubber subjected to an anti-tack treatment using the anti-tack agent for unvulcanized rubber of the present invention includes, for example, an anti-tack treatment process in which the anti-tack agent for unvulcanized rubber of the present invention is adhered to the surface of unvulcanized rubber and an anti-tack treatment is performed. Even if the unvulcanized rubber subjected to an anti-tack treatment produced in this manner is stacked or folded and stored, for example, unvulcanized rubbers do not come in close contact with each other.

The anti-tack treatment process may be, for example, a process in which the aqueous dispersion of an anti-tack agent for unvulcanized rubber of the present invention is adhered to the surface of the unvulcanized rubber and water is additionally evaporated, and thus the anti-tack agent for unvulcanized rubber of the present invention is adhered to the surface of the unvulcanized rubber. More specifically, the anti-tack treatment process preferably includes a suspension adhesion process (aqueous dispersion adhesion process) in which the aqueous dispersion of an anti-tack agent for unvulcanized rubber of the present invention (anti-tack agent suspension) is adhered to the surface of the unvulcanized rubber and a drying process in which the anti-tack agent suspension on the surface of the unvulcanized rubber is dried and a coating formed of the anti-tack agent is formed on surface of the unvulcanized rubber. Such an anti-tack treatment process is referred to as, for example, a wet method.

In the method of producing unvulcanized rubber subjected to an anti-tack treatment of the present invention, the wet method is not particularly limited, and for example, it can be performed in the same manner as in a wet method for a general anti-tack agent for unvulcanized rubber. In the anti-tack agent suspension (aqueous dispersion), a concentration of the anti-tack agent for unvulcanized rubber of the present invention is, for example, as described above, and more specifically, for example, it can be 2 to 3 mass%. However, the concentration is not limited thereto and can be arbitrarily adjusted.

In the suspension adhesion process, for example, it is preferable to adhere the anti-tack agent suspension to unvulcanized rubber which is in a high temperature state (for example, about 80 to 150 °C) due to heat when it is molded in a sheet form or the like.

Examples of a specific method for the suspension adhesion process include a method in which an anti-tack agent suspension is sprayed to unvulcanized rubber by a shower device and a dipping method in which unvulcanized rubber is immersed in a tank containing an anti-tack agent suspension for a short time. In addition, a method in which an anti-tack agent suspension is applied to unvulcanized rubber using a coating device and the like may be used and such methods may be appropriately used in combination.

According to the present invention, as described above, it is possible to achieve both anti-tack properties and a reduction in the amount of contamination caused by the anti-tack agent. The reason (mechanism) why the anti-tack agent for unvulcanized rubber of the present invention has such effects is not entirely clear, but it is speculated as follows. That is, it is inferred that, according to the component (B1) which is a metallic soap, even if an amount of the component (A) which is a component responsible for exhibition of anti-tack properties is small, adhesion of the anti-tack agent to the surface of unvulcanized rubber is effectively improved and there is an effect of adhering the anti-tack agent suspension to the surface without irregularities. Therefore, it is speculated that an excellent anti-tack agent can be obtained according to the present invention. Therefore, since the anti-tack agent suspension prepared from the anti-tack agent for unvulcanized rubber of the present invention reduces the amount of contamination caused by the anti-tack agent (for example, tire contamination) and efficiently covers the surface of the unvulcanized rubber, favorable anti-tack properties are thought to be obtained. However, these are only examples of the speculated mechanism and do no limit the present invention at all.

According to the present invention, it is possible to achieve both anti-tack properties and a reduction in the amount of contamination caused by the anti-tack agent which were difficult to achieve in the related art. A type of rubber to which the anti-tack agent for unvulcanized rubber of the present invention can be applied is not particularly limited, and any unvulcanized rubber may be used. Examples of the type of rubber include rubber such as natural rubber (NR), butadiene rubber (BR), styrene butadiene rubber (SBR), IIR (butyl rubber), and EPDM (ethylene propylene rubber) and rubber in which a plurality of types thereof are mixed.

### Examples

### [Examples 1 to 19 and Comparative Examples 1 and 2]

Components (A) to (C) were kneaded at weight (mass) ratios shown in the following Table s 1 and 2 and anti-tack agents of examples composed of uniform powder were prepared. Then, the obtained anti-tack agents were added to tap water with stirring, and anti-tack agent suspensions in which the concentration of the anti-tack agent was 2 mass% were prepared. Here, in the following Tables 1 and 2, coconut alcohol EO adduct "Reox CC-150", sodium alpha olefin sulfonate "Lipolan LB-840" are product names (Lion Specialty Chemicals Co., Ltd.). Zinc stearate "Zinc Stearate GP," magnesium stearate "Magnesium Stearate GR," and aluminum stearate "Aluminum Stearate 600" are product names (Nof Corporation). Zinc behenate "ZS-7," zinc 12-hydroxystearate "ZS-6," and aluminum 12-hydroxystearate "AS-6" are product names (Nitto Chemical Industry Co., Ltd.).

**[Table 1]**

| | | Component | Examples | | | | | | | | | | | Comparative Example |
|---|---|---|---|---|---|---|---|---|---|---|---|---|---|---|
| | | | 1 | 2 | 3 | 4 | 5 | 6 | 7 | 8 | 9 | 10 | 11 | 1 |
| Component (A) | | Smectite | 20 | 20 | 20 | 20 | 20 | 20 | 20 | 20 | 20 | 20 | 20 | 20 |
| Component (B) | Other than (B1) | Kaolin clay | 52 | 52 | 52 | 52 | 52 | 52 | | 37 | 37 | 37 | | 57 |
| | | Mica | 10 | 10 | 10 | 10 | 10 | 10 | 10 | 10 | 10 | 10 | 10 | 10 |
| | | Calcium carbonate | | | | | | | 52 | | | | 37 | |
| | (B1) | Zinc stearate | 5 | | | | | | 5 | 20 | | | 20 | |
| | | Magnesium stearate | | 5 | | | | | | | 20 | | | |
| | | Aluminum stearate | | | 5 | | | | | | | 20 | | |
| | | Zinc behenate | | | | 5 | | | | | | | | |
| | | Zinc 12-hydroxystearate | | | | | 5 | | | | | | | |
| | | Aluminum 12-hydroxystearate | | | | | | 5 | | | | | | |
| Component (C) | | Coconut alcohol EO adduct | 10 | 10 | 10 | 10 | 10 | 10 | 10 | 10 | 10 | 10 | 10 | 10 |
| | | Sodium alpha olefin sulfonate | 3 | 3 | 3 | 3 | 3 | 3 | 3 | 3 | 3 | 3 | 3 | 3 |
| Evaluation results | | Hardness of dried and solidified product of anti-tack agent (kg) | 2.3 | 2.3 | 2.3 | 2.3 | 2.3 | 2.3 | 2.0 | 1.6 | 1.6 | 1.6 | 1.3 | 3 |
| | | Evaluation of foreign matters in dried and solidified product of anti-tack agent (pieces) | 2 | 2 | 2 | 2 | 2 | 2 | 2 | 1 | 1 | 1 | 1 | 3 |

**[Table 2]**

| | | Component | Examples | | | | | | | | Comparative Example |
|---|---|---|---|---|---|---|---|---|---|---|---|
| | | | 12 | 13 | 14 | 15 | 16 | 17 | 18 | 19 | 2 |
| Component (A) | | Smectite | 40 | 40 | 40 | 40 | 40 | 40 | 40 | 40 | 40 |
| Component (B) | Other than (B1) | Kaolin clay | 32 | 32 | 32 | | 17 | 17 | 17 | | 37 |
| | | Mica | 10 | 10 | 10 | 10 | 10 | 10 | 10 | 10 | 10 |
| | | Calcium carbonate | | | | 32 | | | | 17 | |
| | (B1) | Zinc stearate | 5 | | | 5 | 20 | | | 20 | |
| | | Magnesium stearate | | 5 | | | | 20 | | | |
| | | Aluminum stearate | | | 5 | | | | 20 | | |
| Component (C) | | Coconut alcohol EO adduct | 10 | 10 | 10 | 10 | 10 | 10 | 10 | 10 | 10 |
| | | Sodium alpha olefin sulfonate | 3 | 3 | 3 | 3 | 3 | 3 | 3 | 3 | 3 |
| Evaluation results | | Hardness of dried and so lidified product of anti-tack agent (kg) | 3.5 | 3.5 | 3.5 | 3.2 | 2.9 | 2.9 | 2.9 | 2.8 | 5 |
| | | Evaluation of foreign matters in dried and so lidified product of anti-tack agent (pieces) | 4 | 4 | 4 | 4 | 2 | 2 | 2 | 2 | 7 |

Using the anti-tack agent suspensions (concentration of 2 mass%) of Examples 1 to 19 and Comparative Examples 1 and 2 shown in Tables 1 and 2, the following evaluation was performed.

### <Evaluation>

In various evaluations, the following unvulcanized NR/BR rubber was used as evaluation rubber.

### (Unvulcanized NR/BR rubber)

With respect to 100 parts by mass in total including 70 parts by mass of NR (RSS#3) and 30 parts by mass of BR (product name "BR-01" commercially available from JSR), (162.5 parts by mass in total) unvulcanized NR/BR rubber in which 10 parts by mass of white carbon (product name "Nipsil VN-3" commercially available from Tosoh Silica Corporation), 30 parts by mass of ISAF Black (product name "SEAST 6" commercially available from Tokai Carbon Co., Ltd.), 15 parts by mass of JSRAROMA (process oil) (product name "Aroma 790" commercially available from Japan Sun Oil Co. Ltd.), 3 parts by mass of zinc oxide (two types of zinc oxides commercially available from Hakusuitech Co., Ltd.), 1 part by mass of stearic acid (camellia commercially available from Nof Corporation), 1 part by mass of 6PPD (product name "Nocrac 6C" commercially available from Ouchi Shinko Chemical Industry), 1 part by mass of CBS (product name "Nocceler CZ-G" commercially available from Ouchi Shinko Chemical Industry), and 1.5 parts by mass of sulfur (Tsurumi Chemical Industry Co., Ltd.) were blended.

### (1) Evaluation of hardness of dried and solidified product of anti-tack agent

Anti-tack agent suspensions in which there were 5 mass% of the anti-tack agents blended according to the examples of Examples 1 to 15 and Comparative Examples 1 and 2 were prepared, and put into beakers, and dried by a hot air dryer set at 100 °C for 24 hours, the temperature was returned to room temperature and dried matters were obtained. Then, the dried matters were cut into 2 mm squares, and the collapse strength was measured by a spring balancer (the strength when the solidified product cut out by springs was pressed against a desk and collapsed was measured). In each of the examples, five dried matters were measured, and an average value thereof was used as the hardness of the dried and solidified product of the anti-tack agent.

### (2) Evaluation of foreign matters in dried and solidified product of anti-tack agent

The dried and solidified product of the anti-tack agent prepared in (1) was cut into 2 mm squares, 800 g of the unvulcanized rubber (unvulcanized NR/BR rubber) was kneaded using an open roller with a temperature of 80 to 120 °C, 10 dried and solidified products of the anti-tack agent of the examples were added, and additionally kneading was performed for 5 minutes to prepare rubber sheets (thickness: 5 to 8 mm, 60 cm×15 cm), and foreign matters in the rubber sheets immediately after being unfolded were checked. Evaluation was performed based on the number of dried and solidified products of the anti-tack agent having a size of 0.5 mm square or more which was visually checked.

### (3) Evaluation of adhesion

The unvulcanized rubber (unvulcanized NR/BR rubber) was kneaded using an open roller with a temperature of 80 to 120 °C to prepare a rubber sheet (thickness: 5 to 8 mm, 60 cm×15 cm), and the rubber sheet immediately after being unfolded was immersed in 1 L of the anti-tack agent suspensions (temperature of 40 °C) obtained in the examples of Examples 1 to 15 and Comparative Examples 1 and 2 for about 1 second. Then, the rubber sheet was rapidly pulled up vertically and left at room temperature. The homogeneity of a dry coating of the anti-tack agent (a coating of the dried and solidified product of the anti-tack agent) when a surface area of the rubber sheet was set as 100% and the thickness of the coating (covered with a uniform film thickness) were visually checked, and determination was performed based on the following 5 levels (1 to 5 levels).
1: Cissing occurred
2: The coating was a coating which was vertically striped or muddy
3: The coating was a thin homogeneous coating which was not vertically striped or muddy
4: The coating was a homogeneous coating which was not vertically striped or muddy
5: The coating was a slightly thick homogeneous coating which was not vertically striped or muddy

As described above, an adhesion state in which, by simply immersing the rubber unfolded from the open roller at 80 to 120 °C and whose surface was in a high temperature state in the anti-tack agent suspension for a very short time (about 1 second), the anti-tack agent in a uniform thin film state without irregularities such as vertically striped or muddy-like forms even if water rapidly evaporated from the adhered anti-tack agent suspension remained on the surface of the rubber was preferable.

In all of Examples 1 to 19 which are examples of the present invention, a homogeneous coating (evaluation level of 3 or higher) was obtained. On the other hand, regarding comparative examples, in Comparative Example 2, a homogeneous coating of an evaluation level of 3 was obtained. However, in Comparative Example 1, a muddy-like coating (evaluation level of 2) was obtained.

### (4) Evaluation of anti-tack properties

The unvulcanized rubber (unvulcanized NR/BR rubber) was kneaded using an open roller with a temperature of 80 to 120 °C to prepare a rubber sheet (thickness: 5 to 8 mm, 60 cm×15 cm), and the rubber sheet immediately after being unfolded was immersed in 1 L of the anti-tack agent suspension (temperature of 40 °C) obtained in the examples of Examples 1 to 15 and Comparative Examples 1 and 2 for about 1 second. Then, the rubber sheet was rapidly pulled up vertically and left in a vertical state at room temperature, and dried naturally.

Then, the rubber sheet was cut to 6 cm×15 cm, two sheets were superimposed and laminated. A load of 1 t/m² was applied in a vertical direction from one surface to the test piece in a lamination state and the test piece was left at 60 °C for 12 hours.

Then, the temperature of the test piece was returned to room temperature, and a 180° peeling test was performed using a tensile tester [AGS-500D type, SHIMADZU], and a peeling resistance (N/cm) was measured at a tensile speed of 300 mm/min.

When the peeling resistance was 2.0 N/cm or less, the rubber sheet was able to peel off without a large load, and it was determined that the anti-tack performance was favorable. When the peeling resistance was larger than 2.0 N/cm, a load when the rubber sheet was peeled off was large and it was determined that anti-tack performance was poor. In addition, when the peeling resistance was larger than 3.0 N/mm, the rubber sheet was in close contact and it was determined that peeling off was difficult in general work fields.

In all of Examples 1 to 19 which are examples of the present invention, a favorable anti-tack performance with a peeling resistance of 2.0 N/cm or less was obtained. On the other hand, regarding comparative examples, in Comparative Example 2, favorable anti-tack properties were obtained, but in Comparative Example 1, a poor result with a peeling resistance of larger than 3.0 N/cm was obtained.

In addition, among the above evaluation results, evaluation of the hardness of the dried and solidified product of the anti-tack agent and evaluation of the foreign matters in the dried and solidified product of the anti-tack agent are shown in Tables 1 and 2. As shown in Table 1, Examples 1 to 19 in which a fatty acid zinc salt, magnesium salt, or aluminum salt was used had favorable results in evaluation of the hardness of the dried and solidified product of the anti-tack agent, evaluation of the foreign matters in the dried and solidified product of the anti-tack agent, evaluation of adhesion and evaluation of the anti-tack performance. On the other hand, Comparative Example 1 in which no metallic soap was blended in had favorable results in evaluation of the hardness of the dried and solidified product of the anti-tack agent (the hardness was low) and also had favorable results in evaluation of the foreign matters in the dried and solidified product of the anti-tack agent (the number of foreign matters was small), but as described above, it had low adhesion and inferior anti-tack properties to examples (peeling resistance was larger than 3.0 N/mm). In addition, in Comparative Example 2 in which no metallic soap was blended in similarly, conversely, anti-tack properties were favorable, but the evaluation result of the hardness of the dried and solidified product of the anti-tack agent was not favorable (the hardness was high), and the evaluation result of foreign matters in the dried and solidified product of the anti-tack agent was not favorable (the number of foreign matters was large). That is, in all of Comparative Examples 1 and 2, it was not possible to achieve both anti-tack properties and a reduction in the number of foreign matters caused by the anti-tack agent.

In addition, in the examples, as described above, a zinc salt, a magnesium salt, and an aluminum salt were used as a fatty acid salt. In comparison with the same amount of the smectite, in all of the examples, the hardness of the dried and solidified product of the anti-tack agent and the number of foreign matters were reduced compared to the comparative examples in which no fatty acid salt was blended in.

Priority is claimed on Japanese Patent Application No. 2016-060078, filed March 24, 2016, the content of which is incorporated herein by reference.

## Claims

1. An anti-tack agent for unvulcanized rubber, being **characterized by** containing the following components (A) to (C),
wherein the following component (B) contains the following component (B1) and a content of the following component (B1) is 2 mass% or more and 50 mass% or less with respect to a total mass of the following component (B):
(A) a smectite,
(B) at least one material selected from the group consisting of inorganic silicates excluding smectites, inorganic carbonates, inorganic sulfates, metal oxides, metal hydroxides, red iron oxide, carbon black, graphite, and metallic soaps,
(C) a surfactant, and
(B1) at least one metallic soap selected from the group consisting of zinc, magnesium, and aluminum.

2. The anti-tack agent for unvulcanized rubber according to Claim 1,
wherein, with respect to a total mass of the components (A) to (C),
a content of the component (A) is 10 mass% or more and 50 mass% or less,
a content of the component (C) is 2 mass% or more and 25 mass% or less, and
a content of the component (B1) is 2 mass% or more and 25 mass% or less.

3. An aqueous dispersion of an anti-tack agent for unvulcanized rubber, being **characterized by** containing the following components (A) to (C) and water,
wherein the following component (B) contains the following component (B1) and a content of the following component (B1) is 2 mass% or more and 50 mass% or less with respect to a total mass of the following component (B):
(A) a smectite
(B) at least one material selected from the group consisting of inorganic silicates excluding smectites, inorganic carbonates, inorganic sulfates, metal oxides, metal hydroxides, red iron oxide, carbon black, graphite, and metallic soaps
(C) a surfactant, and
(B1) at least one metallic soap selected from the group consisting of zinc, magnesium, and aluminum.

4. The aqueous dispersion of an anti-tack agent for unvulcanized rubber according to claim 3,
wherein, with respect to a total mass of the components (A) to (C),
a content of the component (A) is 10 mass% or more and 50 mass% or less,
a content of the component (C) is 2 mass% or more and 25 mass% or less, and
a content of the component (B1) is 2 mass% or more and 25 mass% or less.
